# EUROPEAN PATENT SPECIFICATION

(11) **EP 0 581 601 B1**
(45) Date of publication and mention of the grant of the patent: **30.09.1998**
(21) Application number: 93306027.9
(22) Date of filing: 30.07.1993
(51) Int. Cl.: H04N 7/087, H04N 5/92, G11B 27/30

(54) **Video recording and/or reproducing system**
Videoaufzeichnungs- und Wiedergabesystem
Système d'enregistrement et de reproduction de vidéo

(30) Priority: 31.07.1992 KR 9213756
(43) Date of publication of application: 02.02.1994
(73) Proprietor: Samsung Electronics Co., Ltd., Suwon-city, Kyungki-do 441-370 (KR)
(72) Inventor: Yoo, Jae Chern, Seoul (KR)
(74) Representative: Read, Matthew Charles

(56) References cited:
- EP-A- 257 534
- EP-A- 405 939
- EP-A- 472 147
- US-A- 5 097 348
- RADIO FERNSEHEN ELEKTRONIK vol. 40, no. 8, 1991, BERLIN, DE pages 465 - 468 WOLFGANG KORNHAAS 'Von der Textprogrammierung über TOP zum Archivsystem'

## Description

The present invention relates to an indexed video archive system.

In order to find a particular portion or programme from recorded contents of a video tape, a video index search system (VISS) and a video address search system (VASS) have been employed hitherto in VCRs and camcorders. Also, a classification label may be attached to the video tape. VISS is utilised to facilitate the search of recorded contents of a video tape during playing thereof, by storing a specific index signal on a control track of the video tape at the start point of recording. VASS facilitates searching of recorded contents of a video tape during playing thereof by storing a specific index address on a control track on the video tape at the start point of recording. The specific address corresponds to a location on the video tape at which the recording begins, and value of the specific address varies according to the recording position along the length of the tape.

However, VISS and VASS suffer from the following problems.

In VISS, the same index signal is recorded at the start of each recorded programme, so the video tape must be played from its beginning to the end for searching the desired content. In VASS, a fixed address can be utilised when the exact position of the desired content from the start point of the search is already determined, but, when the position of the desired content is not definite, the search must be performed from the start point of the search to the end of the video tape or performed after rewinding the video tape. If a desired picture is not then displayed, the unsearched portion must be search. Consequently, all data recorded on the video tape usually needs to be searched.

Prior art useful for understanting the present invention is disclosed in EP-A-0257534, EP-A-0405939, EP-A-0472147 and "Von der Textprogrammierung ueber TOP zum Archivsystem", Kornhass, W., Radio Fernsehen Elektronik, vol 40., no. 8, 1992, pp. 465-8.

US-A-5097348 discloses a technique for recording and playing message data in a vertical blanking period but this, however, relates only to a superimposition function.

According to the present invention, there is provided an indexed video archive system comprising: recording means for recording video signals representing a plurality of programmes onto a set of recording media and, for each programme recorded, recording media and programme identification codes in a predetermined blanking period of the video signal representing the programme the media identification codes being unique to each medium and the programme identification codes being unique to each programme recorded on a particular medium; reproducing means for reproducing from members of said set of recording media signals representing a plurality of programmes and said media and programme identification codes; a memory; and processing means operative during recording to store said media and programme identification codes and programme labels in the memory, and operative, in response to reproduction of signals from a member of said set of recording media, to retrieve the stored programme labels and programme identification codes for said medium from the memory.

According to the present invention, there is also provided a method of operating an indexed video archive system, the method comprising recording video signals representing a plurality of programmes onto a set of recording media and, for each programme recorded, recording media and programme identification codes in a predetermined blanking period of the video signal representing the programme, the media identification codes being unique to each medium and the programme identification codes being unique to each programme recorded on a particular medium, storing the media identification codes and the programme identification codes together with programme labels in a memory (50), reproducing a media identification code from a member of said set of media and reading programme identification codes and programme labels from the memory in dependence on the reproduced media identification code.

Preferably, the programme identification codes and programme labels are read from the memory and displayed. More preferably, a user can select a programme for reproduction by operating user input means to select a programme whose identification code and label have been read from memory and displayed.

Preferably, the codes are recorded in vertical blanking periods of the video programme signals.

An embodiment of the present invention will now be described, by way of example, with reference to the accompanying drawings, in which:
Figure 1 is a block diagram of a video library system according to the present invention;
Figue 2 is a flow chart of a method of carrying out the present invention ;
Figures 3A to 3E are flow charts for showing the subroutine and supplemental steps of the method according to Figure 2;
Figure 4 illustrates states displayed on a screen during a library operation; and
Figure 5A and 5B are waveforms showing horizontal and vertical sync signals, respectively.

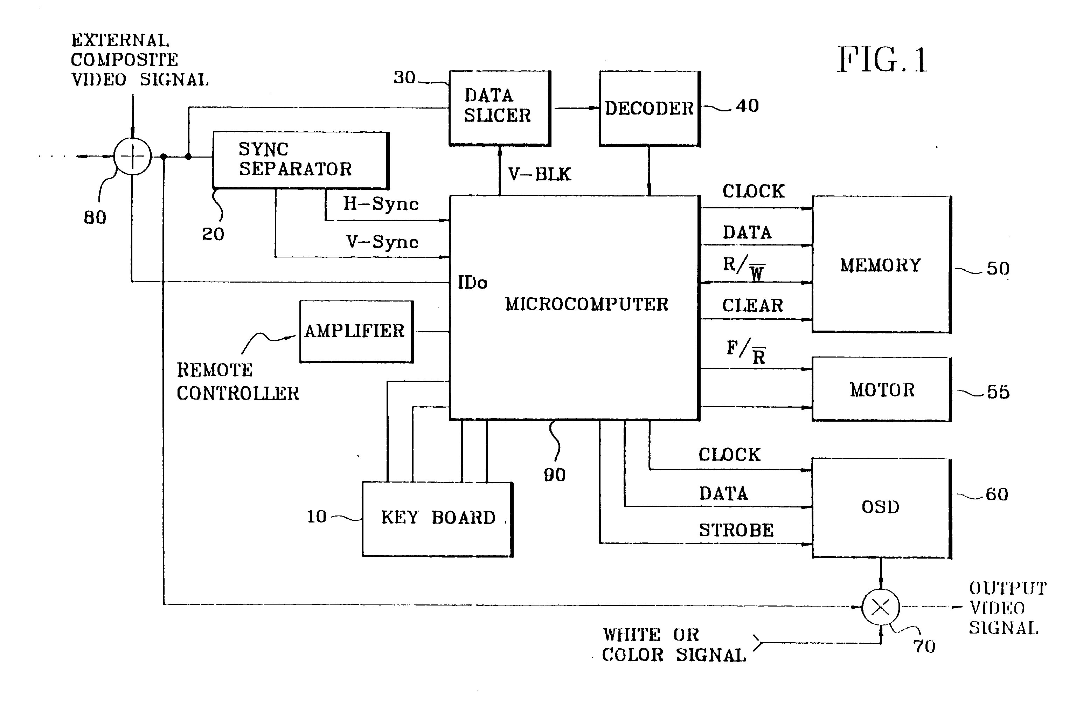

Referring to Figure 1 a composite video signal is received via an adder 80 from an exernal video signal source (not shown), e.g. a video signal input line and tuner. A microcomputer 90 is connected to a sync signal separator 20 for separating a horizontal sync signal H-sync and a vertical sync signal V-sync from the composite video signal. The microcomputer 90 is also connected to an index separator unit consisting of a data slicer 30 and a decoder 40.

The microcomputer 90 counts the horizontal sync signals H-sync and vertical sync signals V-sync. By this counting operation, a vertical blanking period is determined, and in accordance with the invention, the blanking period includes ID information comprising a tape ID code designating the tape number and a program ID code designating a start point of the recording. The microcomputer 90 outputs a vertical blanking signal V-BLK corresponding to the vertical blanking period which contains the ID information to facilitate reproduction of the ID information.

When the vertical blanking signal V-BLK determined as above is output from the micromputer 90 to the data slicer 30, ID information stored during the recording is separated in the data slicer 30 from the composite video signal that is received from the adder 80, by means of the vertical blanking signal V-BLK. The decoder 40 is connected to the data slicer 30 to decode the separated ID information into a signal form recognisable by the microcomputer 90.

The microcomputer 90 is also connected to the following components: a memory 50 for storing a library corresponding to the ID code which increases one by one per recording, a motor 55 driven by a control voltage and a control signal F/R from the microcomputer 90, and a key board 10 with keys for controlling the microcomputer 90, such as a search key, a clear key, a library on/off key and character keys. An amplifier is connected to the microcomputer 90 for amplifying an remote-control signal.

The microcomputer 90 is further connected to an on-screen display (OSD) 60 for displaying the ID code and library corresponding to the ID code extracted from the memory 50 in response to the input by the key board 10. The OSD 60 is connected to a mixer 70 whch combines the composite video signal from the adder 80 with an on screen display signal from the OSD 60 to thus output the result of the combination. A white or colour signal for controlling colour of characters displayed on the screen is received from one side of the mixer 70.

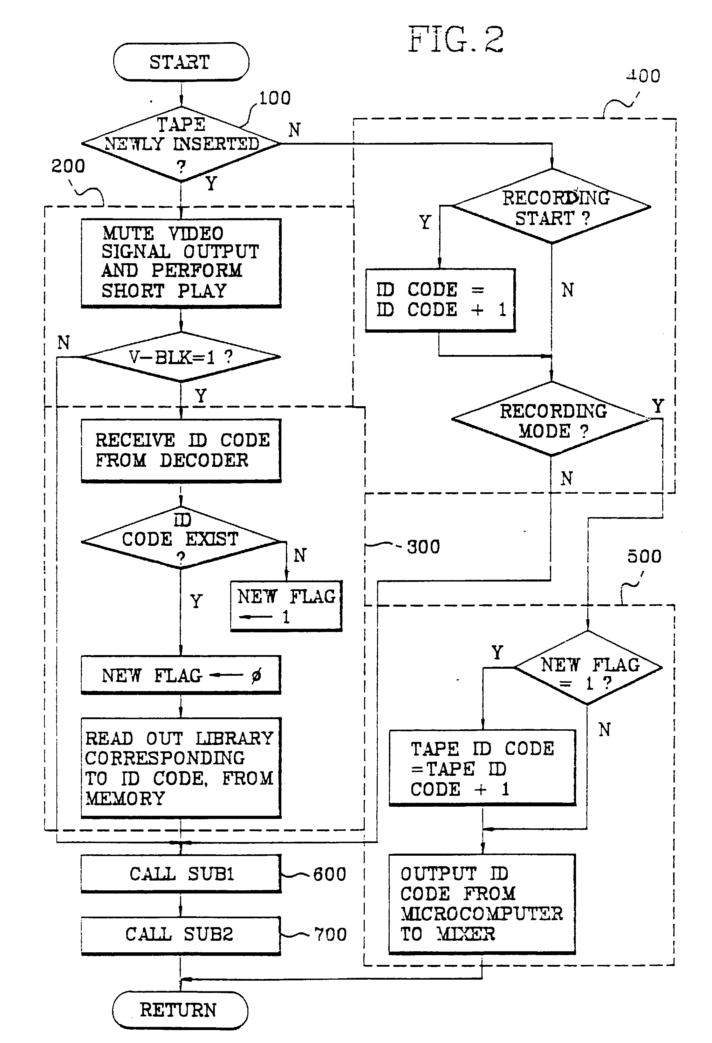

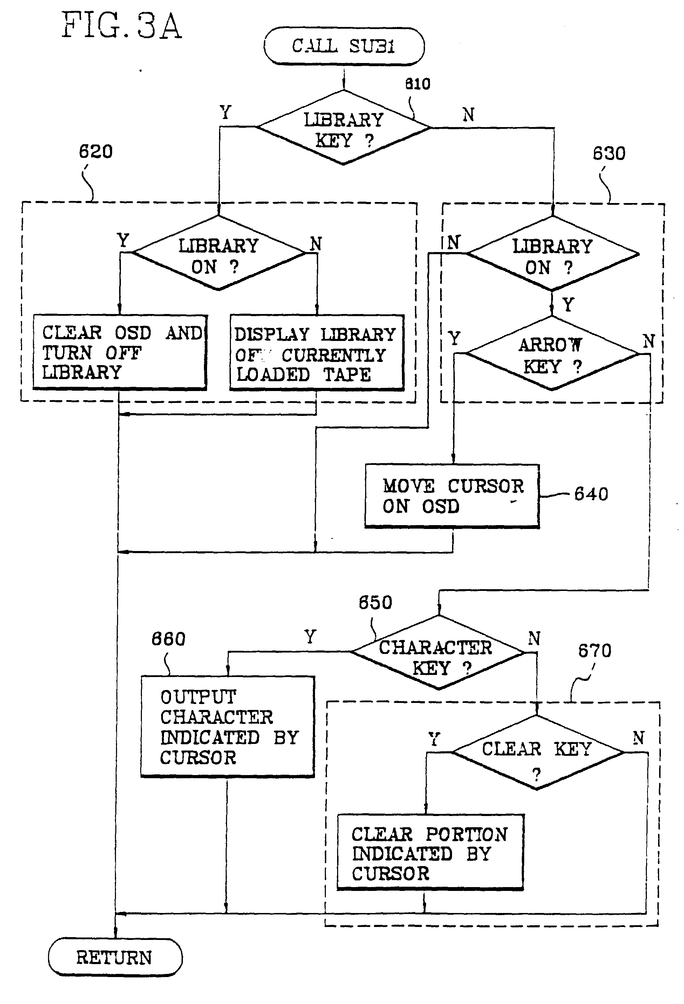

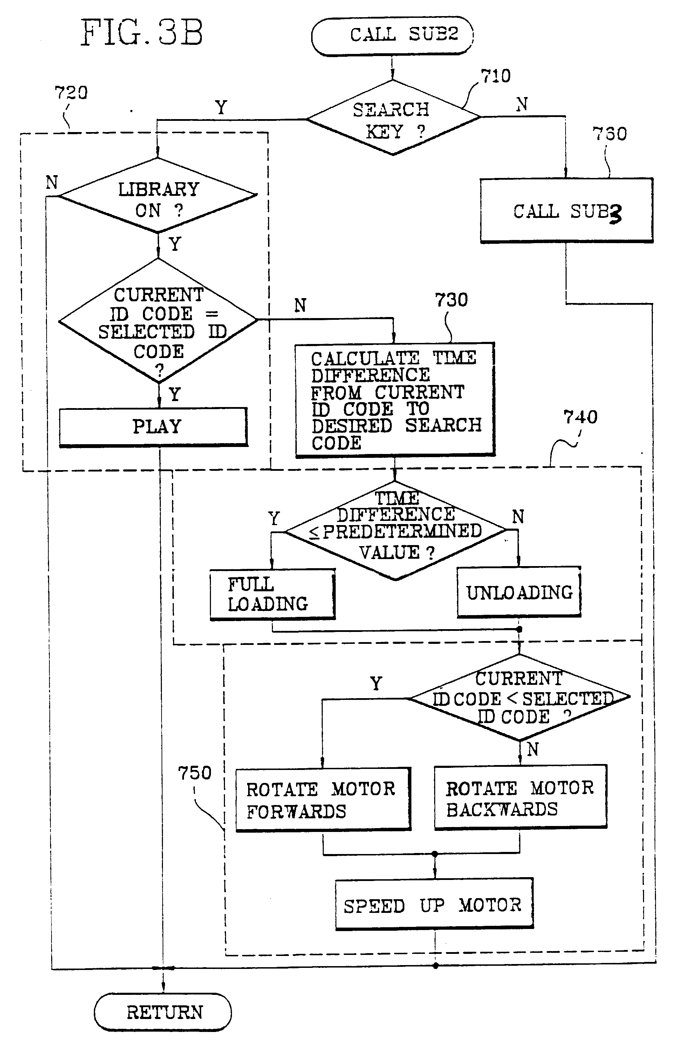

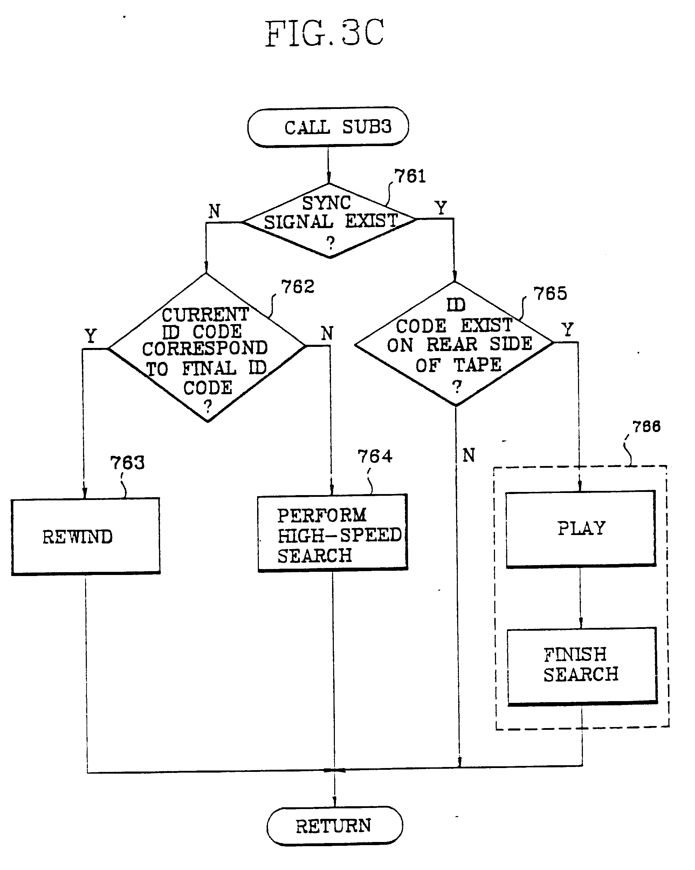

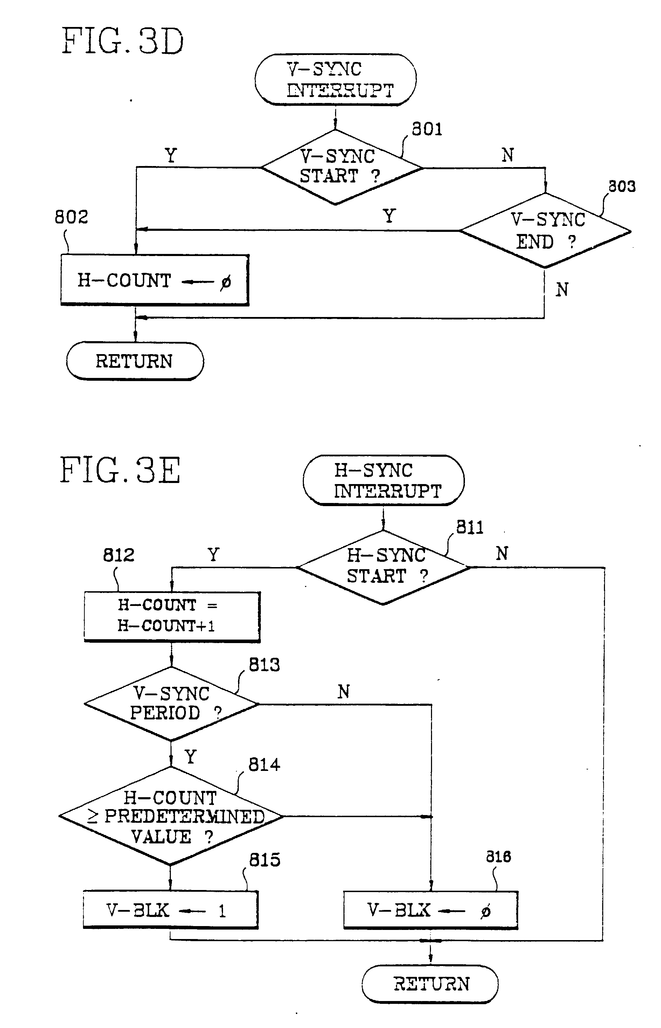

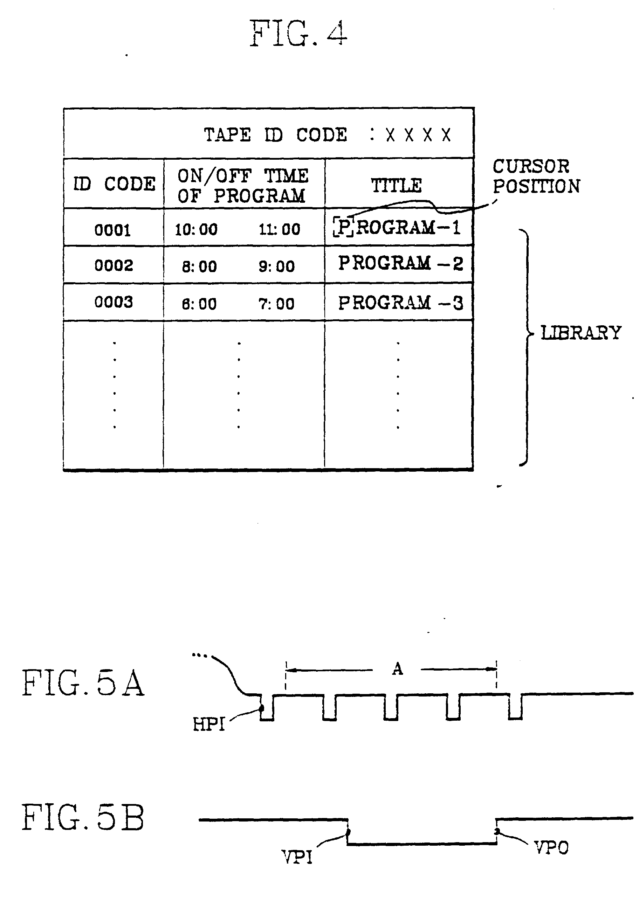

Therefore, the microcomputer 90 extracts the ID information or library corresponding to the ID tape code from the memory 50 to ouput the extracted library to the OSD 60. The on-screen display signal from the OSD 60 is supplied to the mixer 70 to be combined with the composite video signal from the video signal source to display the ID information on the screen. At this time, the white or colour signal input to the mixer 70 controls the colour of the displayed portion on the screen and an embodying technique which is known per se and this will not be described herein. The ID information displayed via the OSD 60 is illustrated in Figure 4, which will be explained later in the description with reference to Figures 2 and 3.

The user may play, clear or change the displayed program ID code by selecting a desired library and using various functional keys on the key board 10 such as the search key, clear key, character keys and library on/off key.

In the case of a new tape which has no information thereon, the ID code on the tape cannot be extracted from the memory since the memory 50 has no ID code in respect of the new tape. However, the microcomputer 90 automatically outputs a tape ID code from its ID code output terminal IDo, and the tape ID code is combined with the external composite video signal (e.g. a television broadcasting signal) in the adder 80. The tape ID code is also stored in the memory 50. At this time, the tape ID code and a program ID code are recorded, with the program code in a format of 0001 as shown in Figure 4. In case that the tape is not a new one, an ID code is extracted from the memory and fed to the microcomputer 90 since the ID code is already stored in the memory 50, the extracted program ID code is increased by one, and the tape ID code is left unchanged. Thus, the increased program ID code is combined with the external composite video signal to be recorded, and the increased program ID code is also recorded in the memory 50. The reason for increasing the program ID code by one is in that the program ID code is increased upon recording whereas the tape ID code is changed only in the case of a new tape.

According to the present invention as described above, the tape ID code and program ID code are recorded or reproduced in the vertical blanking period of the video signal, thereby enabling the search of the library of the video tape to be achieved without the need to carry out a time consuming search of the entire tape as with the prior VISS or VASS systems

Operation of the apparatus having the above stated construction will be described in detail with reference to Figures 2 and 3A to 3E.

Figure 2 is a flow chart for a method embodying a video library system according to the present invention. Here, upon insertion of a video tape, ID information or a library corresponding to the tape is displayed on the screen, or an ID code is combined with the external composite video signal to be recorded.

In step 100, the microcomputer 90 determines whether a video tape is newly inserted or not. In step 200, when the video tape is newly inserted, the microcomputer 90 mutes a video signal ouput and automatically performs a short play to check whether a vertical blanking period having the ID codes exists or not. If the vertical blanking period exists in step 200, in step 300, the ID code separated from the composite video signal by means of the vertical blanking signal from the micromputer 90 is decoded in the decoder 40 to be input to the microcomputer 90 which in turn confirms the existence of the ID code in the signal received from the decoder 40. If there is no ID Code, the tape is regarded as a new one, so that a new flag is set to one. Contrarily, if there is an ID code, the tape is regarded as a used one so that the new flag is set to zero and then the content of the library corresponding to the ID Code input from the decoder 40 to the micromputer 90 is read out from the memory 50.

When the video tape is not newly inserted one in step 100, step 400 is performed. In step 400 if recording on the tape is to be started, the program ID code is increased by one, and the mode is checked whether it is of a recording or not. When it is determined that the mode is the recording mode in step 400, in step 500, the new flag is checked whether it is set to one. If the new flag is set to one, the tape ID code is increased by one by regarding the tape being a new one. Whereas, if the new flag is not set to one, which means that the tape is not a new one, the tape ID code is not increased and the ID code is output from the microcomputer 90 to the mixer 70 for the on-screen display.

If the vertical blanking period ID code does not exist in step 200, the mode is not of recording, or the step 300 is carried out, an on-screen display subroutine (hereinafter referred to as SUB1) is called for displaying the library corresponding to the tape ID code according to a key-input, in step 600. After performing step 600, a current program ID code and a program ID code selected by the user are compared with each other in according with the input of the search key, and the motor 55 is controlled in response to the result of the comparison. Thus, in step 700, a first search subroutine (hereinafter referred to as SUB2) is called.

Figures 3A to 3E are flow charts showing the subroutines and supplemental steps of the method according to Figure 2.

Figure 3A is a flow chart of the SUB1 of step 600 shown in Figure 2. In step 610, the input key is checked whether it is a library key showing the ID information or not. Here, when the input key is determined as the library key, in step 620, the library-on state (i.e., the on-screen display of the library) is confirmed. Thereafter, the OSD is cleared so as to turn off the library display in the case of the library-on state, of the content of the library of the currently loaded tape is displayed on the screen.

When the library-key input is not pressed in step 610, in step 630, the library-on state is confirmed. In case of the library-on state, an arrow-key input is checked. When the input key is determined to be an arrow key in step 630, in step 640, a cursor on the OSD displaying the title of the program corresponding to the ID code shown in Figure 4 is moved in a direction defined by the arrow key.

If the input key is not the arrow key in step 630, the input key is checked whether it is a character key or not in step 650. If the character-key input is confirmed, a corresponding character is output by means of the cursor in step 660. If the character key is not input in step 650, in step 670, clear key input is checked, so that the portion currently indicated the cursor on the corresponding line can be cleared. After performing the above-described steps, the subroutine SUB2 shown in Figure 2 is carried out.

Figure 3B is a flow chart showing SUB2 of step 700. After confirming the SUB1 of step 600 shown in Figure 3A, SUB2 is called in step 700. Therefore, by the input of the search key, the current program ID code and the ID code selected by the user are compared with each other to control the drive of the motor 55, thereby executing a play operation.

In more detail, when step 710 determines that the input key is the search key for selecting a desired program from the on-screen display, in step 720, the library-on state is confirmed. Then, in case of the library -on state, the current ID code is compared with the ID code selected by the user by means of the search key. Thus, when they are the same, the tape is played.

If the current ID code and the ID code selected by the user to be searched are not the same in step 720, a tape length corresponding to the time difference between the recording time of a program with the current ID code, and the recording time of a program recorded on the selected ID code, is calculated in step 730. In order to speed up program selection, the tape is run at high speed until close to the selected program, with the tape in an unloaded state, and then at normal speed in a loaded state. To this end, in step 740, the time diference is compared with a predetermined value, so that the tape is fully loaded when the time difference is smaller than the predetermined value, or is unloaded when it is greater than the predetermined value. Referring to Figure 4, assuming that the current program ID code is 0001 corresponding to PROGRAM-1, and the program ID code selected by the search key is 0003 for PROGRAM-3, the time difference from the current ID code to the ID code to be searched, for is two hours because the PROGRAM-1 is one hour long from 10:00 to 11:00 and PROGRAM-2 whose ID code is 0002 is one hour long from 8:00 to 9:00. Accordingly, the time difference from the beginning of the program having code 0001 to the start of the program for ID code 0003 (PROGRAM-3) is two hours. The tape is according fast forwaded for a tape length corresponding to say one hour and fifty minutes, in an unloaded condition in order to prevent the tape and tape head from being damaged, and to avoid the time lapse that would be caused by forwarding the tape in the fully loaded state. Thus, the selected program is searched by forwarding the tape in the fully loaded state in the case of a small time difference between the program corresponding to the current program ID code and the program corresponding to the selected program ID code. But, if the time difference is great, the tape travel is initially performed in an unloaded state and then changed to be the fully loaded state to search the desired program. The predetermined value selected for step 740 determines when the search switches from the initial searching in the unloaded state, to the final searching in the loaded state.

After performing step 740, the value of the current ID code is compared with that of the selected ID code in step 750. If the current ID code is smaller than the selected ID code this means that the position of the selected ID code precedes the current ID code and thus the motor 55 needs to wind the tape foward until reaching the portion to be searched. However, if the current ID code is larger or equal to the selected ID code, this means that the selected ID code is disposed after the current ID code, and thus the motor 55 needs to rewind the tape until reaching the portion to be searched.

If step 710 determines that the input key is not the search key, a second search subroutine (hereinafter referred to as SUB3) is called in step 760 to check the existence of the sync signal, performing an operation according to the result of step 710.

Figure 3C is a flow chart showing the SUB3 of Figure 3B. The existence of the sync signal is checked in step 761. When the sync signal is not detected, it is determined whether the current ID code is the final code or not in step 762. Here, the non-existence of the sync signal denotes that nothing is displayed on the screen. If the result of step 762 indicates that the current program ID code is the final program ID code, i.e. indicating the final program recorded on the tape, the tape is rewound, otherwise a high-speed search is performed in step 764. Meanwhile, if the sync signal exists in step 761, the search is performed for determining the existence of the program ID code beyond the current position of the tape in step 765. Therefore, when the ID code exists, in step 766, the recorded content is reproduced and the search is finished.

In addition to the sequential operation described heretofore with reference to Figures 2A and 3A to 3C, an abruptly occurring horizontal or vertical interrupt can be processed as illustrated in Figure 3D and 3E, respectively, which will be explained with rreference to Figures 5A and 5B.

First, as shown in Figure 3D, the interrupt with respect to the vertical sync signal V-sync is processed as below. In step 801, the interrupt is checked whether it occurs at the start point of the vertical sync signal or not. When a point indicated by VPI of Figure 5B is determined as the start point of the vertical sync signal in step 801, the horizontal sync signal is set to zero to inhibit further counting of the horizontal sync signal since the vertical blanking period may include an ID code. When an interrupt does not occur at the start point of the vertical sync signal in step 801, the interrupt is checked again whether it occurs at the end point of the vertical sync signal, i.e. a point indicated by VPO in Figure 5B, in step 803. When the point is determined as the end of the vertical sync signal, there is no need to count the horizontal sync signal due to the fact that the video signal follows the end of the vertical sync signal. Accordingly, the horizontal sync signal is set to zero to inhibit further counting of the horizontal sync signal, and then the operating having been performed before the occurrence of the interrupt, is continued.

An interrupt with respect to the horizontal sync signal is processed as below. In step 811, the interrupt is checked whether it occurs at the start point of the horizontal sync signal designated by HPI in Figure 5A or not. Thus, when the interrupt occurs at the start point of the horizontal sync signal, the horizontal sync signal is increased by one so as to search a portion having the ID code in step 812. In step 813, the interrupt is checked whether it occurs during the vertical sync signal period corresponding to a section A in Figure 5A. When the vertical sync period is confirmed in step 813, in step 814, the counted value of the horizontal sync signal is compared with a predetermined value in order to confirm the counted value of the horizontal sync signal to be included in the vertical blanking period having the ID code. When the counted value is greater than or equal to the predetermined value, a vertical blanking erasing signal is output to the data slicer 30, in step 815. If not, in step 816, the vertical blanking signal is not output to the data slicer 30 but the operation having been performed before the occurrence of the interrupt is continued.

According to the present invention as described above, the horizontal and vertical sync signals are separated from the composite video signal, and the microcomputer 90 counts the sync signal to output the vertical blanking signal loading the ID code to the data slicer 30 during recording, so that the data slicer 30 separates the ID code from the composite video signal to output the separated ID code to the decoder 40. Following this operation, the decoder 40 decodes and outputs the ID code as a signal recognisable by the microcomputer 90 which in turn extracts a library corresponding to the ID code recorded during the recording from the memory 50 and then outputs the extracted library to the OSD 60. The on-screen display signal from the OSD 60 is combined with the composite video signal from the adder 80 in the mixer 70 and the result of the combination is output to be reproduced on the screen. The tape ID code and ID code displayed on the screen by means of the on-screen display signal are selected, cleared or stored again by means of various functional keys on the key board 10.

On the other hand, during recording, the microcomputer 90 extracts the program ID code stored in the memory 50 to increase the ID code by one, and the result is output to the adder 80 to be combined with the externally input composite video signal and recorded. Therefore, the ID information including tape ID code and program ID code can be recorded or played during the vertical blanking period.

As a result, by recording and playing the tape ID information comprising tape ID code and program ID code in the vertical blanking period, the video library system can be embodied without adopting VISS, VASS or a label.

When the present invention has been particularly shown and described with reference to particular embodiments thereof, it will be understood by those skilled in the art that various changes in form and details may be effected.

## Claims

1. An indexed video archive system comprising:
recording means for recording video signals representing a plurality of programmes onto a set of recording media and, for each programme recorded, recording media and programme identification codes in a predetermined blanking period of the video signal representing the programme the media identification codes being unique to each medium and the programme identification codes being unique to each programme recorded on a particular medium;
reproducing means for reproducing from members of said set of recording media signals representing a plurality of programmes and said media and programme identification codes;
a memory (50); and
processing means (30, 40, 90) operative during recording to store said media and programme identification codes and programme labels in the memory, and operative, in response to reproduction of signals from a member of said set of recording media, to retrieve the stored programme labels and programme identification codes for said medium from the memory.

2. A system according to claim 1, including display means (60, 70) configured to display the retrieved programme identification codes and programme labels.

3. A system according to claim 2, including user input means operative in conjunction with the display means, whereby a programme can be selected for reproduction, the processing means being operative to control said reproducing means to reproduce the signals for the selected programme.

4. A system according to claim 1, 2 or 3, wherein said codes are recorded in vertical blanking periods of composite video signals.

5. A system according to any preceding claim, wherein the processing means comprises:
a sync signal separator (20) for separating the vertical and horizontal sync signals from a composite video signal, reproduced by the reproducing means;
a microcomputer (90) for counting the separated horizontal sync signals to identify a vertical blanking period containing said media and programme identification codes, controlling the display means and controlling the recording means and the reproduction means; and
a decoder (40) for extracting the media and programme identification codes from the identified vertical blanking period and sending the codes to the microcomputer,
the microcomputer being responsive to the codes sent by the decoder to read the stored programme labels and programme identification codes for said media from the memory.

6. A method of operating an indexed video archive system, the method comprising recording video signals representing a plurality of programmes onto a set of recording media and, for each programme recorded, recording media and programme identification codes in a predetermined blanking period of the video signal representing the programme, the media identification codes being unique to each medium and the programme identification codes being unique to each programme recorded on a particular medium, storing the media identification codes and the programme identification codes together with programme labels in a memory (50), reproducing a media identification code from a member of said set of media and reading programme identification codes and programme labels from the memory in dependence on the reproduced media identification code.

7. A method according to claim 6, including displaying the programme identification codes and programme labels read from the memory.

8. A method according to claim 7, including responding to operation of user input means (10) by reproducing a programme signal for a programme whose identification code and label have been read from memory and displayed.

9. A method according to claim 6, 7 or 8, wherein said codes are recorded in vertical blanking periods of the video programme signals.

## Patentansprüche

1. Index-Videoarchivierungssystem, mit:
einer Aufzeichnungseinrichtung zum Aufzeichnen von mehrere Programme repräsentierenden Videosignalen auf einer Menge von Aufzeichnungsmedien und, für jedes aufgezeichnete Programm, Aufzeichnungsmedium- und Programm-Identifizierungscodes in einer vorgegebenen Austastperiode des das Programm repräsentierenden Videosignals, wobei die Medium-Identifizierungscodes für jedes Medium eindeutig sind und die Programm-Identifizierungscodes für jedes auf ein besonderes Medium aufgezeichnetes Programm eindeutig sind;
einer Wiedergabeeinrichtung zum Wiedergeben von Elementen der Menge von aufgezeichneten Mediumsignalen, die mehrere Programme und die Medium- und Programm-Identifizierungscodes repräsentieren;
einem Speicher (50); und
einer Verarbeitungseinrichtung (30, 40, 90), die während der Aufzeichnung in der Weise arbeitet, daß sie die Medium- und Programm-Identifizierungscodes und Programmetiketten im Speicher ablegt, und als Antwort auf die Wiedergabe von Signalen von einem Element der Menge von Aufzeichnungsmedien in der Weise arbeitet, daß sie die abgelegten Programmetiketten und Programm-Identifizierungscodes für das Programm aus dem Speicher wiedergewinnt.

2. System nach Anspruch 1, mit einer Anzeigeeinrichtung (60, 70), die so konfiguriert ist, daß sie die wiedergewonnenen Programm-Identifizierungscodes und Programmetiketten anzeigt.

3. System nach Anspruch 2, mit einer Benutzereingabeeinrichtung, die in Verbindung mit der Anzeigeeinrichtung betrieben wird, wobei ein Programm für die Wiedergabe gewählt werden kann, wobei die Verarbeitungseinrichtung in der Weise arbeitet, daß sie die Wiedergabeeinrichtung steuert, damit sie die Signale für das gewählte Programm wiedergibt.

4. System nach Anspruch 1, 2 oder 3, bei dem die Codes in vertikalen Austastperioden des zusammengesetzten Videosignals aufgezeichnet werden.

5. System nach irgendeinem vorangehenden Anspruch, bei dem die Verarbeitungseinrichtung enthält:
einen Sync-Signalseparator (20) zum Separieren der vertikalen und horizontalen Sync-Signale vom zusammengesetzten Videosignal, das durch die Wiedergabeeinrichtung wiedergegeben wird;
einen Mikrocomputer (90) zum Zählen der separierten horizontalen Sync-Signale, um eine vertikale Austastperiode zu identifizieren, die die Medium- und Programm-Identifizierungscodes enthält, um die Anzeigeeinrichtung sowie die Aufzeichnungseinrichtung und der Wiedergabeeinrichtung zu steuern; und
einen Decodierer (40) zum Entnehmen der Medium- und Programm-Identifizierungscodes aus der identifizierten vertikalen Austastperiode und zum Senden der Codes zum Mikrocomputer,
wobei der Mikrocomputer auf die vom Decodierer gesendeten Codes anspricht, um die gespeicherten Programmetiketten und Programm-Identifizierungscodes für die Medien aus dem Speicher zu lesen.

6. Verfahren zum Betreiben eines Index-Videoarchivierungssystems, wobei das Verfahren enthält: Aufzeichnen von mehrere Programme repräsentierenden Videosignalen in eine Menge von Aufzeichnungsmedien und, für jedes aufgezeichnete Programm, von Aufzeichnungsmedium- und Programm-Identifizierungscodes in einer vorgegebenen Austastperiode des das Programm repräsentierenden Videosignals, wobei die Medium-Identifizierungscodes für jedes Medium eindeutig sind und die Programm-Identifizierungscodes für jedes auf ein besonderes Medium aufgezeichnetes Programm eindeutig sind, Ablegen der Medium-Identifizierungscodes und der Programm-Identifizierungscodes zusammen mit Programmetiketten in einem Speicher (50), Wiedergeben eines Medium-Identifizierungscodes aus einem Element der Menge von Medien und Lesen der Programm-Identifizierungscodes und der Programmetiketten aus dem Speicher in Abhängigkeit von dem wiedergegebenen Medium-Identifizierungscode.

7. Verfahren nach Anspruch 6, das enthält: Anzeigen der Programm-Identifizierungscodes und der Programmetiketten, die aus dem Speicher gelesen werden.

8. Verfahren nach Anspruch 7, das enthält: Antworten auf die Betätigung einer Benutzereingabeeinrichtung (10) durch Wiedergeben eines Programmsignals für ein Programm, dessen Identifizierungscode und dessen Etikett aus dem Speicher ausgelesen und angezeigt worden sind.

9. Verfahren nach Anspruch 6, 7 oder 8, bei dem die Codes in vertikalen Austastperioden der Videoprogrammsignale aufgezeichnet werden.

## Revendications

1. Système d'archivage vidéo indexé comprenant :
des moyens d'enregistrement pour enregistrer des signaux vidéo représentant une pluralité de programmes sur un ensemble de supports d'enregistrement et, pour chaque programme enregistré, des codes d'identification de supports d'enregistrement et de programmes au cours d'une période de suppression prédéterminée du signal vidéo représentant le programme, les codes d'identification de supports étant uniques à chaque support et les codes d'identification de programmes étant uniques à chaque programme enregistré sur un support particulier ;
des moyens de reproduction pour reproduire depuis des éléments dudit ensemble de supports d'enregistrement des signaux représentant une pluralité de programmes et lesdits codes d'identification de supports et de programmes ;
une mémoire (50) ; et
des moyens de traitement (30, 40, 90) ayant pour fonction, pendant l'enregistrement, de stocker dans la mémoire lesdits codes d'identification de supports et de programmes et des étiquettes de programmes, et ayant pour fonction, en réponse à la reproduction de signaux depuis un élément dudit ensemble de supports d'enregistrement, d'extraire de la mémoire les étiquettes de programmes et les codes d'identification de programmes stockés pour ledit support.

2. Système selon la revendication 1, comportant des moyens d'affichage (60, 70) configurés pour afficher les codes d'identification de programmes et les étiquettes de programmes extraits.

3. Système selon la revendication 2, comportant des moyens d'entrée destinés à l'utilisateur fonctionnant en association avec les moyens d'affichage, de sorte qu'un programme puisse être sélectionné pour la reproduction, les moyens de traitement ayant pour fonction de commander lesdits moyens de reproduction afin de reproduire les signaux pour le programme sélectionné.

4. Système selon la revendication 1, 2 ou 3, dans lequel lesdits codes sont enregistrés lors de périodes de suppression verticale de signaux vidéo composites.

5. Système selon l'une quelconque des revendications précédentes, dans lequel les moyens de traitement comprennent :
un séparateur de signal de synchronisation (20) pour séparer les signaux de synchronisation verticale et horizontale d'un signal vidéo composite, reproduit par les moyens de reproduction ;
un micro-calculateur (90) pour calculer les signaux de synchronisation horizontale séparés afin d'identifier une période de suppression verticale contenant lesdits codes d'identification de supports et de programmes, pour commander les moyens d'affichage et commander les moyens d'enregistrement et les moyens de reproduction ; et
un décodeur (40) pour extraire les codes d'identification de supports et de programmes de la période de suppression verticale identifiée et envoyer les codes au micro-calculateur,
le micro-calculateur étant sensible aux codes envoyés par le décodeur pour lire depuis la mémoire les étiquettes de programmes et les codes d'identification de programmes stockés pour lesdits supports.

6. Procédé pour faire fonctionner un système d'archivage vidéo indexé, le procédé consistant à enregistrer des signaux vidéo représentant une pluralité de programmes sur un ensemble de supports d'enregistrement et, pour chaque programme enregistré, à enregistrer des codes d'identification de supports et de programmes au cours d'une période de suppression prédéterminée du signal vidéo représentant le programme, les codes d'identification de supports étant uniques à chaque support et les codes d'identification de programmes étant uniques à chaque programme enregistré sur un support particulier, à stocker dans une mémoire (50) les codes d'identification de supports et les codes d'identification de programmes en association avec des étiquettes de programmes, à reproduire un code d'identification de support depuis un élément dudit ensemble de supports et à lire des codes d'identification de programmes et des étiquettes de programmes depuis la mémoire en fonction du code d'identification de support reproduit.

7. Procédé selon la revendication 6, comprenant l'affichage des codes d'identification de programmes et des étiquettes de programmes lus depuis la mémoire.

8. Procédé selon la revendication 7, comprenant une réponse à l'actionnement des moyens d'entrée (10) destinés à l'utilisateur en reproduisant un signal de programme pour un programme dont le code d'identification et l'étiquette ont été lus depuis la mémoire et affichés.

9. Procédé selon la revendication 6, 7 ou 8, dans lequel lesdits codes sont enregistrés au cours de périodes de suppression verticale des signaux de programmes vidéo.
